# EUROPÄISCHE PATENTSCHRIFT

(11) **EP 1 899 981 B1**
(45) Veröffentlichungstag und Bekanntmachung des Hinweises auf die Patenterteilung: **22.09.2010**
(21) Anmeldenummer: 06762231.6
(22) Anmeldetag: 28.06.2006
(51) Int. Cl.: G21D 1/04, F04D 29/04, F16C 33/10, F16C 17/14

(54) **KERNTECHNISCHE ANLAGE MIT DURCH SPIRALRILLENLAGERN GELAGERTER PUMPENVORRICHTUNG**
NUCLEAR INSTALLATION WITH PUMP UNIT HAVING SPIRAL-GROOVED DYNAMIC PRESSURE BEARINGS
INSTALLATION NUCLEAIRE AVEC DISPOSITIF DE POMPE AVOIR UN PALIER A RAINURES SPIRALES

(30) Priorität: 28.06.2005 DE 102005030485
(43) Veröffentlichungstag der Anmeldung: 19.03.2008
(73) Patentinhaber: AREVA NP GmbH, 91052 Erlangen (DE)
(72) Erfinder: SCHULZE, Günther, 90556 Seukendorf (DE); KETTL, Heinz, 91080 Uttenreuth (DE); HELLER, Max, 91080 Uttenreuth (DE)
(74) Vertreter: Tergau & Pohl Patentanwälte
(86) Internationale Anmeldenummer: PCT/EP2006/006239
(87) Internationale Veröffentlichungsnummer: WO 2007/000331

(56) Entgegenhaltungen:
- GB-A- 1 370 522
- JP-A- 4 312 210
- JP-A- 63 277 888
- JP-A- 2003 322 098
- US-A- 5 076 716

## Beschreibung

Die vorliegende Erfindung betrifft eine kerntechnischen Anlage, insbesondere einen Druckwasser- oder Siedewasserreaktor mit einer Pumpenvorrichtung, die eine vertikal ausgerichtete Welle aufweist.

In kerntechnischen Anlagen sind verschiedene Pumpenvorrichtungen erforderlich, wie zum Beispiel die Kühlmittelpumpe eines Druckwasserreaktors oder die Umwälzpumpe eines Siedewasserreaktors. Derartige Pumpenvorrichtungen sind im Allgemeinen groß dimensioniert, besitzen eine vertikal ausgerichtete Welle und müssen nicht zuletzt aus sicherheitstechnischen Gründen höchsten Qualitätsanforderungen bezüglich Leistungsvermögen und Haltbarkeit genügen.

Bei Maschinen mit vertikal ausgerichteten Wellen, die durch Gleitlager geführt sind und bei denen eine geringe radial gerichtete hydraulische Kraft vorhanden ist, wie dies im Allgemeinen bei Axialpumpen und Halbaxialpumpen der Fall ist, treten in der Regel Schwingungen auf, die als Halbfrequenzwirbel (auch unter der Bezeichnung ω/2-Whirl geläufig) bekannt sind. Derartige periodische Anregungen verursachen eine Laufunruhe, die sich auch auf benachbarte Schweißnähte von Gehäuseteilen oder Stützkonstruktionen negativ auswirken kann.

Auch existiert bei solchen Pumpenvorrichtungen immer die Gefahr des Durchschlagens des Schmierfilms (auch Whip genannt). Dieser Fall tritt ein, wenn die Restunwucht gleich der gerichteten Radialkraft ist, und kann nicht prinzipiell ausgeschlossen werden. Durch den Durchschlag des Schmierfilms kann es zu Materialberührungen von Welle und Buchse kommen, was schließlich zur Zerstörung des Gleitlagers führen kann. Lediglich die Dämpfung durch das Schmiermittel kann im Einzelfall diese Materialberührungen mildem; das Schwingungsverhalten selbst bleibt davon aber unberührt.

Das oben genannte Problem kann grundsätzlich durch spezielle Ausführungen des Gleitlagers als so genanntes Mehrflächenlager, als Mehrkeillager, als Mehrkeiltaschenlager oder als Gleitlager mit mehreren einzeln aufgehängten Lagersegmenten vermieden werden. Diese bekannten Lagertypen sind jedoch sehr aufwändig herzustellen und damit sehr kostenintensiv. Daher wird in der Praxis im Allgemeinen auf derartige Gleitlagertypen verzichtet und man versucht, über eine so genannte Wellenbahnüberwachung den Zustand des Gleitlagers zu kontrollieren. Eine Beseitigung des geschilderten Problems wird durch diese Maßnahme jedoch nicht erreicht.

Der vorliegenden Erfindung liegt daher die Aufgabe zugrunde, eine Pumpenvorrichtung für eine kerntechnische Anlage mit einer vertikal ausgerichteten Welle, die durch wenigstens ein Gleitlager geführt ist, bereitzustellen, mit der das oben genannte Problem der Entstehung eines Halbfrequenzwirbels im Lager auf einfache Weise vermieden oder zumindest minimiert wird.

Diese Aufgabe wird gelöst durch eine kerntechnische Anlage mit einer Pumpenvorrichtung mit den Merkmalen des Anspruchs 1. Eine vorteilhafte Ausgestaltung und Weiterbildung der Erfindung ist Gegenstand des abhängigen Anspruchs 2.

Bei der Pumpenvorrichtung für eine kemtechnische Anlage mit einer vertikal ausgerichteten Welle, die durch wenigstens ein Gleitlager geführt ist, ist das wenigstens eine Gleitlager erfindungsgemäß ein Radiallager, das als ein Spiralrillenlager ausgebildet ist.

Das Spiralrillenlager, das bisher ausschließlich bei Spezialfällen kleiner Lager Anwendung gefunden hat, zeichnet sich durch verschiedene vorteilhafte Eigenschaften aus, die gemäß der Erfindung nun auch bei einer großen Pumpenvorrichtung einer kerntechnischen Anlage mit einer vertikal ausgerichteten Welle ausgenutzt werden sollen. Die Eigenschaften des Spiralrillenlagers führen insbesondere dazu, dass die Pumpenwelle gut zentriert wird und die Halbfrequenzwirbel der Pumpenwelle vermieden bzw. zumindest minimiert werden, sodass letztlich auch die oben genannten Materialberührungen herkömmlicher Pumpenvorrichtungen vermieden werden können Das als Spiralrillenlager ausgebildete Gleitlager kann dabei sowohl als Radiallager als auch als Axiallager eingesetzt werden.

Die erfindungsgemäß ausgestaltete Pumpenvorrichtung wird dabei als Kühlmittelpumpe eines Druckwasserreaktors oder als Umwälzpumpe eines Siedewasserreaktors angewendet.

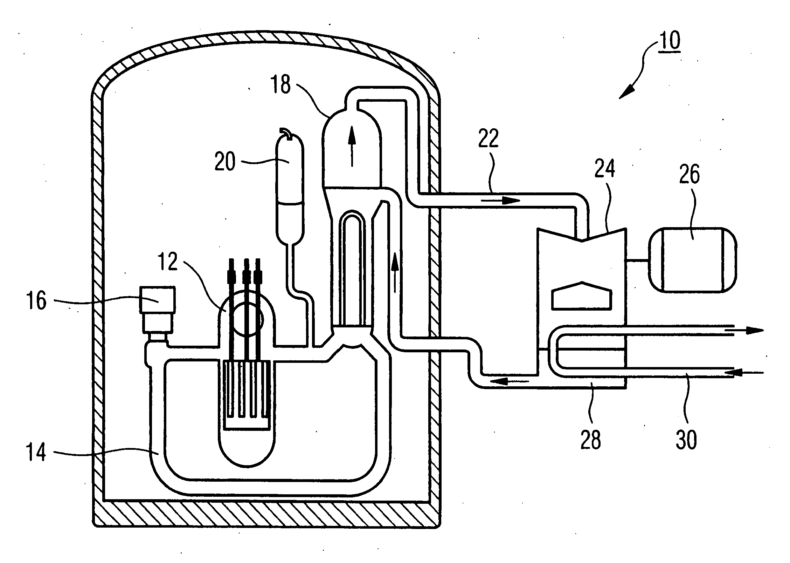

Obige sowie weitere Aufgaben, Merkmale und Vorteile der Erfindung werden aus der nachfolgenden Beschreibung eines bevorzugten, nicht-einschränkenden Ausführungsbeispiels unter Bezugnahme auf die beiliegende Zeichnung besser verständlich. Darin zeigt die einzige Fig. 1 eine schematische Darstellung des Aufbaus eines Druckwasserreaktors, nach der vorliegenden Erfindung.

Beim Druckwasserreaktor 10 wird normales "leichtes" Wasser zugleich als Moderator und als Kühlmittel verwendet. Er gehört deshalb zu Klasse der Leichtwasserreaktoren.

Druckwasserreaktoren 10 besitzen zwei Hauptkühlkreisläufe, den Primärkühlkreislauf und den Sekundärkühlkreislauf. Der Primärkreislauf 14 besteht aus einem Reaktordruckbehälter 12 mit Reaktorkem, einer Hauptkühlmittelpumpe 16 und einem Dampferzeuger 18 sowie den verbindenden Rohrleitungen. Ferner ist in bekannter Weise ein Druckhalter 20 vorgesehen.

Die Hauptkühlmittelpumpe 16 fördert das Kühlmittel (aufbereitetes Wasser, ca. 290°C) in den dickwandigen Reaktordruckbehälter 12 aus Stahl und dort in einem Ringkanal zunächst nach unten. Am Behälterboden wird das Kühlmittel umgelenkt und umströmt anschließend von unten nach oben die Brennstäbe im Reaktordruckbehälter 12. Dabei kühlt das Kühlmittel die Brennstäbe, wodurch es sich auf etwa 325°C erhitzt. Die so aufgenommene Wärme wird anschließend im Dampferzeuger 18 an den Sekundärkühlkreislauf 22 abgegeben. Das Wasser kühlt wieder auf 290°C ab und wird durch die Hauptkühlmittelpumpe 16 wieder in den Reaktordruckbehälter 12 zurück geleitet. Der hohe Betriebsdruck von ca. 160 bar verhindert dabei die Bildung von Im Dampferzeuger 18 wird die Wärmeenergie über die Heizrohre an den Sekundärkühlkreislauf 22 abgestrahlt und führt bei ca. 70 bar zur Bildung von 280°C heißem Dampf. Der Dampf überträgt die Wärmeenergie auf die Turbine 24, wo mittels eines angeschlossenen Generators 26 elektrische Energie erzeugt wird. Im nachgeschalteten Kondensator 28 kondensiert der abgekühlte Dampf bei etwa 30 bis 35°C zu Wasser, das dann wieder als Speisewasser in den Dampferzeuger 18 zurück gepumpt wird. Die Kondensationswärme wird üblicherweise durch einen weiteren Kondensatorkühlkreislauf 30 über einen Kühlturm an die Umgebung abgegeben.

Eine weitere bekannte Art von Kernreaktoren sind die so genannten Siedewasserreaktoren. Bei einem Siedewasserreaktor (nicht dargestellt) siedet das als Kühlmittel verwendete Wasser bereits an den Brennstäben der Brennelemente im Reaktordruckbehälter, sodass der Dampf für den Turbinen-Generator-Satz schon im Reaktor entsteht und keine gesonderten Dampferzeuger notwendig sind. Das dem Reaktordruckbehälter zugeführte Wasser wird durch entsprechende Umwälzpumpen in den Ringkanal angesaugt und in den unteren Teil des Reaktordruckbehälters gefördert. Von dort durchströmt das Wasser den Reaktorkem nach oben, nimmt dabei Wärme auf und tritt als Dampf-Wasser-Gemisch aus dem Reaktordruckbehälter aus.

Sowohl die obigen Hauptkühlmittelpumpen des Druckwasserreaktors als auch die Umwälzpumpen des Siedewasserreaktors besitzen vertikal ausgerichtete Wellen, die in Gleitlagern (Radiallager und möglicherweise auch Axiallager) geführt sind. Diese Gleitlager sind als so genannte Spiralrillenlager ausgebildet.

Die hier angesprochenen Spiralrillenlager sind vollständig von einem Fluid (Öl, Fett, Wasser) umgeben und weisen daher keine so genannten "freien Oberflächen" auf. Im begrenzten Schmierkeils ein Druckaufbau nur über einen Teilumfang der Welle stattfindet, liegt bei einem Spiralrillenlager aufgrund der über den gesamten Umfang verteilten Rillen ein Druckaufbau ebenfalls über den gesamten Umfang vor. Dadurch treten auch Rückstellkräfte über den gesamten Umfang weitgehend gleichmäßig verteilt auf. Diese über den gesamten Umfang gleichmäßig verteilten Rückstellkräfte bewirken, dass die Welle gut zentriert wird und dass die Halbfrequenzwirbel mit hoher Wahrscheinlichkeit unterdrückt werden. Hierdurch wird der Gleichlauf der Welle verbessert und das eingangs beschriebene Schwingungsverhalten herkömmlicher Gleitlager wird vollständig vermieden, was zu einem verbesserten Leistungsvermögen der jeweiligen Pumpenvorrichtung und zu einer Verringerung der Materialbelastung und so schließlich zu einer längeren Lebensdauer dieser Pumpenvorrichtung führt.

Weiter wird durch die Pumpwirkung von Spiralrillenlagem das Anfahrverhalten der Pumpenvorrichtung verbessert, da der Mischungsbereich sehr schnell durchfahren wird.

Von Vorteil ist, dass das jeweilige Spiralrillenlager mit Wasser geschmiert wird, so dass freie Oberflächen besonders weitgehend vermieden werden können.

Ein weiterer Vorteil besteht darin, dass das Spiralrillenlager uneingeschränkt die Eigenschaften eines normalen Gleitlagers besitzt, sodass selbst im Fall eines totalen Schmiermittetvertusts die Notlaufeigenschaften des normalen Gleitlagers bei entsprechender Vorsorge genutzt werden können.

Ferner sind die Lagerschalen des Spiralrillenlagers bevorzugt zylindrisch ausgelegt und somit einfach herstellbar. Zur Herstellung des Spiralrillenlagers sind somit keine Spezialwerkzeuge oder-maschinen erforderlich.

Das Spiralrillenlager kann sowohl als Radiallager als auch als Axiallager eingesetzt werden. Bei Axiallagern liegt der Vorteil in einer deutlich höheren Tragfähigkeit gegenüber den üblicherweise benutzten Mitchel-Lagem.

Spiralrillenlager sind zwar aus dem Stand der Technik bereits bekannt, sie wurden jedoch bisher ausschließlich für relativ klein dimensionierte Präzisionslager eingesetzt. Beispielhaft sei hier die drehbewegliche Lagerung von Polygonspiegeln von Scannern zum Beispiel in Laserdruckern genannt (siehe zum Beispiel die DE 197 12 432 C2).

Die Anwendung von Spiralrillenlagern in Pumpen ist aus JP 63277888 A bekannt, nicht jedoch für den Primärkreislauf kerntechnischer Anlagen.

Gerade bei der Anwendung in einer kerntechnischen Anlage weisen die mit Spiralrillenlagem versehenen Pumpen folgende besonders günstige Merkmale auf:
- Das jeweilige Lager ist vollständig von Kühl- und Schmierflüssigkeit umgeben.
- Es ist eine axiale Durchströmung des Lagers (Radial- oder Axiallager) vorgesehen.
- Als Schmiermedium ist Wasser vorgesehen.

Die Anwendung erfolgt insbesondere für großdimensionierte schnell laufende Wellen.

### Bezugszeichenliste

- 10: kemtechnische Anlage
- 12: Reaktordruckbehälter
- 14: Primärkühlkreislauf
- 16: Hauptkühlmittelpumpe
- 18: Dampferzeuger
- 20: Druckhalter
- 22: Sekundärkühlkreislauf
- 24: Turbine
- 26: Generator
- 28: Kondensator
- 30: Kondensatorkühlung

## Patentansprüche

1. Kerntechnische Anlage, nämlich Druckwasserreaktor oder Siedewasserreaktor, mit einer als Kühlmittelpumpe des Druckwasserreaktors oder Umwälzpumpe des Siedewasserreaktors eingesetzten Pumpenvorrichtung (16) mit einer vertikal ausgerichteten Welle, die durch wenigstens ein Gleitlager geführt ist,
**dadurch gekennzeichnet,**
**dass** das wenigstens eine Gleitlager ein Radiallager ist und als ein Spiralrillenlager ausgebildet ist.

2. Kerntechnische Anlage nach Anspruch 1,
**dadurch gekennzeichnet,**
**dass** das wenigstens eine Gleitlager axial durchströmt ist.

## Claims

1. A nuclear facility, namely a pressurized-water reactor or a boiling-water reactor, having a pumping device (16), used as coolant pump of the pressurized-water reactor or as recirculating pump of the boiling-water reactor, with a vertically oriented shaft carried by at least one friction bearing,
**characterized in that**
the at least one friction bearing is a radial bearing and is designed as a spiral flute bearing.

2. The nuclear facility of claim 1,
**characterized in that**
the at least one friction bearing is axially flowed through.

## Revendications

1. Installation nucléaire, à savoir réacteur à eau sous pression ou réactor à eau bouillante, ayant un dispositif de pompage (16), utilisé comme pompe de fluide de refroidissement du réacteur à eau sous pression ou comme de recirculation du réactor à eau bouillante, avec un arbre d'orientation verticale logé dans au moins un palier à glissement,
**caractérisée en ce que**
le au moins un palier à glissement est un palier à charge radiale et est conçu comme palier à rainure hélicoïdale.

2. Installation nucléaire d'après la revendication 1,
**caractérisée en ce que**
le flux passe à travers le au moins un palier à glissement en direction axiale.
